# EUROPÄISCHE PATENTSCHRIFT

(11) **EP 2 008 155 B1**
(45) Veröffentlichungstag und Bekanntmachung des Hinweises auf die Patenterteilung: **12.10.2011**
(21) Anmeldenummer: 07724292.3
(22) Anmeldetag: 10.04.2007
(51) Int. Cl.: G03B 17/10, G03B 19/18

(54) **VORRICHTUNG ZUR GERÄUSCHISOLATION VON LAUFBILDKAMERAS**
DEVICE FOR SOUNDPROOFING MOTION PICTURE CAMERAS
DISPOSITIF D'ISOLATION ACOUSTIQUE POUR CAMÉRAS

(30) Priorität: 11.04.2006 DE 102006017750
(43) Veröffentlichungstag der Anmeldung: 31.12.2008
(73) Patentinhaber: Arnold & Richter Cine Technik GmbH & Co. Betriebs KG, 80799 München (DE)
(72) Erfinder: OTT, Franz, 2353 Guntramsdorf (AT)
(74) Vertreter: Ninnemann, Detlef
(86) Internationale Anmeldenummer: PCT/EP2007/003354
(87) Internationale Veröffentlichungsnummer: WO 2007/118700

(56) Entgegenhaltungen:
- CH-A5- 643 369
- DE-A1- 4 028 540
- US-A- 4 174 157

## Beschreibung

Die Erfindung bezieht sich auf eine Vorrichtung zur Geräuschisolation von Laufbildkameras gemäß dem Oberbegriff des Anspruchs 1.

Laufbildkameras weisen Motor- und Getriebeeinrichtungen zum kontinuierlichen Transport eines Laufbildfilmes zwischen einer Filmkassette und der Laufbildkamera, zum intermittierenden Transport des Laufbildfilmes entlang eines Bildfensters, in dem der Laufbildfilm belichtet wird, und für eine rotierende Blendeneinrichtung auf, mit der der Strahlengang vom Aufnahmeobjektiv zum Bildfenster während des Filmtransports unterbrochen wird. Diese Motor- und Getriebeeinrichtungen erzeugen mechanische Schwingungen, die als Luft- und Körperschall zum Kameragehäuse gelangen und von dort an die Umgebung abgestrahlt werden, was bei Tonfilmaufnahmen zu störenden bzw. nicht akzeptablen Nebengeräuschen führt. Um den Eigengeräuschpegel einer Laufbildkamera auf ein Mindestmaß zu reduzieren ist es daher erforderlich, die Übertragung dieser unabdingbaren Schwingungen auf die Außenhaut der Laufbildkamera zu verhindern.

Zur Geräuschisolation oder Geräuschunterdrückung werden dämpfende Materialien wie Gummi und dergleichen zwischen den beweglichen Teilen der Filmaufnahmekamera und dem Kameragehäuse eingesetzt, die jedoch den Nachteil einer geringen mechanischen Stabilität aufweisen, so dass ein häufiges Nachjustieren erforderlich ist, da das die Brennpunktebene bestimmende Kameraobjektiv am Kameragehäuse befestigt ist, während das Bildfenster, das die Bildebene zur Belichtung des Laufbildfilmes festlegt, Teil der beweglichen Teile der Laufbildkamera ist, so dass jede Veränderung des Abstandes zwischen dem Kameragehäuse und dem die beweglichen Teile der Laufbildkamera tragenden Kameraskelett Bildunschärfen bzw. Bildverschiebungen hervorruft.

Aus der US 4,174,157 A ist eine Laufbildkamera mit einem Kameragehäuse, das eine

Objektivbefestigung aufweist, und einem innerhalb des Kameragehäuses angeordneten Kameraskelett bekannt, an und in dem die beweglichen und Geräusche erzeugenden Teile der Laufbildkamera angeordnet sind. Zwischen dem Kameraskelett und dem Kameragehäuse sind Schall absorbierende Verbindungselemente vorgesehen, die einen Außengewindestift aufweisen, der in das Kameragehäuse bzw. in das Kameraskelett einschraubbar ist und von einer Innengewindehülse aufgenommen wird, zwischen der und einer Außengewinde-Lagerbuchse ein hohlzylindrisches Elastomer-Einsatzstück vorgesehen ist.

Der Außengewindestift, die Innengewindehülse, das Elastomer-Einsatzstück und die Au-βengewinde-Lagerbuchse sind koaxial zueinander angeordnet und die Außengewinde-Lagerbuchse wird von einem Innengewindeelement auf dem jeweils anderen Teil des Kameragehäuses bzw. der Innenkamera aufgenommen. Wird nach dem Lösen des Au-βengewindestiftes die Außengewinde-Lagerbuchse innerhalb der Innengewindehülse verdreht, so ist eine seitliche Ausrichtung der Innenkamera und der beweglichen Kamerateile in Bezug auf das Kameragehäuse und damit auf die Objektivbefestigung möglich.

Bei dieser bekannten Vorrichtung zur Geräuschisolation der Innenkamera bzw. des Kameraskeletts gegenüber dem Kameragehäuse ist ein ständiges Nachjustieren an den schallabsorbierenden Verbindungselementen erforderlich, um die Einhaltung des Auflagemaßes zwischen der Objektivaufnahme am Kameragehäuse und der Bildebene am Kameraskelett zu gewährleisten.

Aus der DE 40 28 540 C2 ist eine Vorrichtung zur Geräuschisolation von Laufbildkameras mit einer schallschützenden Abstützung des die geräuscherzeugenden Teile des Kameramechanismus tragenden Kameraskeletts und dem Kameragehäuse bekannt, das einen Objektivträger aufweist, an dem eine auswechselbare Aufnahmeoptik befestigt ist und zur schallschützenden Abstützung des Kameraskeletts in dem Kameragehäuse mehrere schallisolierende Verbindungselemente zwischen dem Kameraskelett und dem Kameragehäuse angeordnet sind. Um einerseits das Auflagemaß ohne Nachjustierung einzuhalten und andererseits eine optimale Geräuschisolation zu gewährleisten, weisen die schallisolierenden Verbindungselemente eine richtungsabhängige Eigensteifigkeit mit einer hohen, fest definierten und temperaturkompensierten Steifigkeit in Richtung des Auflagemaßes zwischen der Objektivebene des Kameragehäuses und der Bildebene des Kameraskeletts sowie einer geringen Steifigkeit in der Ebene senkrecht dazu auf. Aufgabe der vorliegenden Erfindung ist es, eine Vorrichtung der eingangs genannten Art zu schaffen, die eine optimale Geräuschisolation ohne Veränderung des Auflagemaßes infolge von Temperaturschwankungen und ohne Notwendigkeit einer Nachjustierung des Auflagemaßes gewährleistet.

Diese Aufgabe wird erfindungsgemäß durch die Merkmale des Anspruchs 1 gelöst.

Die erfindungsgemäße Lösung gewährleistet eine optimale Geräuschisolation der Laufbildkamera, d. h. sowohl eine optimale Körperschallisolation als auch eine maximale Luftschallisolation, ohne dass die Mittel zur Geräuschisolation zu einer Veränderung des Auflagemaßes infolge von Temperaturschwankungen auf die Laufbildkamera führen oder eine Nachjustierung des Auflagemaßes nach Temperaturänderungen erforderlich ist.

Die erfindungsgemäße Lösung ermöglicht eine Absorption des vom Kameraskelett, das die geräuscherzeugenden Einrichtungen der Laufbildkamera trägt, abgegebenen Luftund Körperschalls durch Verbindungselemente, die derart angeordnet und ausgebildet sind, dass bei optimaler Schalldämpfung das Auflagemaß zwischen der am Kameragehäuse ausgebildeten Objektivebene und der am Kameraskelett ausgebildeten Bildebene nicht durch Formveränderungen aufgrund von Temperaturschwankungen verändert wird, so dass das Auflagemaß konstant ist bzw. nur noch von temperaturabhängigen Änderungen des Materials des Kameragehäuses und/oder des Kameraskeletts abhängt.

Durch die Aufhängung des Kameraskeletts in Richtung der Querachse oder Z-Achse der Laufbildkamera, das heißt senkrecht zur Längsachse oder X-Achse bzw. optischen Achse der Laufbildkamera, in der der Aufnahmestrahlengang verläuft, und senkrecht zur Hochachse oder Y-Achse der Laufbildkamera, an miteinander fluchtenden oberen Verbindungselementen ist das Kameraskelett um diese obere Aufhängungsachse schwenkbar, so dass sich Temperaturschwankungen lediglich in Längenänderungen der oberen Verbindungselemente in Richtung der Z-Achse und damit nicht auf das in Richtung der X-Achse verlaufende Auflagemaß der Laufbildkamera auswirken.

Bei einer Ausrichtung des unteren Verbindungselements in Y-Richtung wirken sich Temperaturschwankungen ebenfalls nicht auf das in X-Richtung verlaufende Auflagemaß der Laufbildkamera aus. Nur bei einem in X-Richtung, das heißt parallel zum Aufnahmestrahlengang, ausgerichteten unteren Verbindungselement führen Temperaturschwankungen zu einer Veränderung des Auflagemaßes der Laufbildkamera, die jedoch um das Maß des Abstandes des unteren Verbindungselements zum Bildfenster reduziert werden. Zusätzliche Maßnahmen führen dazu, dass bei einem in X-Richtung ausgerichteten unteren Verbindungselement Temperaturschwankungen zu keinen Längenänderungen des unteren Verbindungselements und damit zu keiner Veränderung des Auflagemaßes in Folge von durch Temperaturschwankungen bedingten Längenänderungen der Verbindungselemente führen.

Durch die Drei-Punkt-Aufhängung des Kameraskeletts am Kameragehäuse wird zum Einen das Kameraskelett sicher am Kameragehäuse fixiert und damit ein definiertes Auflagemaß über die gesamte Fläche des Bildfensters im Kameraskelett in Bezug auf den Objektivträger am Kameragehäuse gewährleistet und zum Anderen werden durch ein Minimum an Verbindungspunkten zwischen dem Kameraskelett und dem Kameragehäuse die Übertragungsmöglichkeiten von Körperschall vom Kameraskelett auf das Kameragehäuse auf ein Minimum reduziert.

In bevorzugter Ausführungsform enthalten die Verbindungselemente Pufferelemente aus einem Polyurethan-Elastomer ("Eladur"), das hervorragende Dämpfungseigenschaften besitzt, jedoch mit ca. 250 10⁻⁶ mm/mm°C einen wesentlich höheren Ausdehnungskoeffizienten als Aluminium mit ca. 21,6 * 10⁻⁶ mm/mm°C oder Stahl mit ca. 10-16 * 10⁻⁶ mm/mm°C aufweist, so dass beispielsweise ein buchsenförmiges Pufferelement mit einer Höhe von 4 mm bei einer Abkühlung von plus 20 °C auf minus 20 °C um ca. 0,04 mm (4 * 40 * 250 * 10⁻⁶ = 0,04) schrumpft. Durch die erfindungsgemäße Skelett-Aufhängung wirkt sich jedoch eine derartige Längen- bzw. Volumenänderung entweder nicht oder nur geringfügig bzw. bei spezieller, konstruktiver Ausbildung des unteren Verbindungselements ebenfalls nicht auf das Auflagemaß aus.

Die in Z-Richturig ausgerichteten und miteinander fluchtenden oberen Verbindungselemente weisen vorzugsweise mit dem Kameragehäuse und dem Kameraskelett verbundene Pufferelemente auf, die mittels eines eine horizontale Schwenkachse für das Kameraskelett ausbildenden Stiftes miteinander verbunden sind, wobei jedes der beiden Verbindungselemente einen eigenen Stift aufweisen kann, der mit dem Stift des jeweils anderen Verbindungselements fluchtet, oder es wird ein die beiden oberen Verbindungselemente miteinander verbindender und eine durchgehende Achse ausbildender Stift vorgesehen.

In weiterer Ausgestaltung der erfindungsgemäßen Lösung weisen die oberen Verbindungselemente jeweils zwei in Aufnahmen des Kameraskeletts und des Kameragehäuses eingesetzte und stirnseitig aneinander liegende Pufferelemente auf.

Durch Ausrichtung des mindestens einen, in der Mittenebene der Laufbildkamera angeordneten unteren Verbindungselements in Y-Richtung führen Längen- bzw. Volumenänderungen des Verbindungselements in Folge von Temperaturschwankungen nicht zu einer Veränderung des Auflagemaßes. Ein in X-Richtung ausgerichtetes Verbindungselement kann derart gestaltet werden, dass das Auflagemaß zwischen der Objektivebene am Kameragehäuse und der Bildebene am Kameraskelett bei Temperaturschwankungen im Wesentlichen unabhängig von der Aufhängung des Kameraskeletts am Kameragehäuse ist.

In einer ersten Variante besteht das untere Verbindungselement aus zwei Pufferelementen, von denen ein erstes Pufferelement zwischen der einen Seite eines mit einer Bohrung versehenen Flansches des Kameraskeletts und einer Ausnehmung oder Bohrung im Kameragehäuse angeordnet ist und ein zweites Pufferelement an der anderen Seite des Flansches des Kameraskeletts anliegt, und einer durch Bohrungen der Pufferelemente und die Bohrung des Flansches des Kameraskeletts gesteckten Schraube, die mit einem Schraubenkopf am zweiten Pufferelement anliegt und kraft- oder formschlüssig in die Ausnehmung oder Bohrung des Kameragehäuses eingesetzt ist, wobei die Schraube vorzugsweise die Pufferelemente in Längsrichtung der Schraube vorspannt.

In dieser Ausführungsform wirkt sich eine Längen- bzw. Volumenänderung des Pufferelements nicht auf das Auflagemaß aus, da sich die Position der durch die Bohrungen der Pufferelemente und des Flansches des Kameraskeletts gestreckten Schraube nicht gegenüber dem Flansch des Kameraskeletts einerseits und der die Schraube aufnehmenden Ausnehmung oder Bohrung des Kameragehäuses andererseits ändert, wenn die Pufferelemente mit Vorspannung an der Wand des Kameragehäuses, den Außenseiten des Flansches des Kameraskeletts und des Schraubenkopfes anliegen, so dass sich bei einer Temperaturänderung nur die Vorspannung, nicht aber die Länge die Pufferelemente ändert.

Zur Einstellung der Vorspannung der Pufferelemente kann entweder eine Distanzbuchse zwischen dem Schraubenkopf und dem Kameragehäuse oder der in die Ausnehmung oder Bohrung im Kameragehäuse eingesetzten Buchse angeordnet werden, deren Länge ein Maß für die Vorspannung der Pufferelemente ist, oder ein Federelement im Kraftfluss zwischen dem Schraubenkopf und dem Kameragehäuse oder der in die Ausnehmung oder Bohrung im Kameragehäuse eingesetzten Buchse vorgesehen werden.

In einer weiteren Variante der erfindungsgemäßen Lösung weist das Kameragehäuse einen unterhalb der Bildmitte der Laufbildkamera angeordneten, in das Innere des Gehäuses der Laufbildkamera gerichteten Verbindungsarm mit einem endseitigen Flansch auf, zwischen dem und dem Flansch des Kameraskeletts das untere Verbindungselement angeordnet ist.

Bei dieser Anordnung des unteren Verbindungselements zur Aufhängung des Kameraskeletts am Kameragehäuse wirkt sich eine Längenänderung der Pufferelemente in X-Richtung entgegengesetzt zu einer Längenänderung des in das Innere des Gehäuses der Laufbildkamera gerichteten Verbindungsarms des Kameragehäuses aus, so dass nach Art eines Rost'schen Pendels sich die Längenänderungen der Pufferelemente und des Verbindungsarms des Kameragehäuses bei Temperaturschwankungen gegenseitig aufheben und dadurch die gesamte Längenänderung der unteren Aufhängung bei entsprechender Auslegung der Pufferelemente und des Verbindungsarms Null wird.

In der Variante, in der das untere Verbindungselement in Y-Richtung ausgerichtet ist, ist es vorteilhaft, das untere Verbindungselement aus einem in eine Aufnahme am Boden des Kameragehäuses eingesetzten Pufferelement mit einem parallel zur Bildebene der Laufbildkamera ausgerichteten, mit dem Kameraskelett verbundenen und von der Wand des Kameragehäuses beabstandeten, kraft- oder formschlüssig mit dem Pufferelement verbundenen Stift oder einer. Schraube auszubilden.

In dieser Ausführungsform hat der Stift weder zum Kameragehäuse noch zum Kameraskelett Kontakt, so dass keine Geräusche übertragende Schallbrücke gebildet wird. Durch die Ausrichtung des Stiftes oder der Schraube in Y-Richtung wirkt sich zudem eine Längenänderung des Stiftes bzw. der Schraube und der Pufferelemente nicht auf das Auflagemaß aus.

Eine weitere Variante der erfindungsgemäßen Lösung ist dadurch gekennzeichnet, dass die Pufferelemente eine radiale Dehnungsfuge aufweisen, die durch einen radialen Schnitt durch die Pufferelemente oder durch Entfernen eines Segmentes aus den Pufferelementen gebildet wird.

Bei dieser Variante der erfindungsgemäßen Lösung werden die Pufferelemente in radialer Richtung durchgeschnitten bzw. ein Segment aus den hohlzylindrischen bzw. zylinderringförmigen Pufferelementen herausgeschnitten und damit eine Dehnungsfuge geschaffen, so dass sich bei Temperaturänderungen die Dehnungsfuge der Pufferelemente ändert, nicht aber die Position des Lage bestimmenden Stiftes in Bezug auf die Lagerung des Stiftes in den Pufferelementen bzw. in den Verbindungspunkten des Kameraskeletts mit dem Kameragehäuse.

Ein weiterer Vorteil dieser Variante der erfindungsgemäßen Lösung besteht darin, dass größere Toleranzen bei der Festlegung der Vorspannung der Pufferelemente möglich sind, mit denen das Auflagemaß unabhängig von Längenänderungen der Pufferelemente gehalten wird.

Anhand mehrerer in der Zeichnung dargestellter Ausführungsbeispiele sollen weitere Merkmale und Vorteile der Erfindung sowie der der Erfindung zugrunde liegende Gedanke näher erläutert werden. Es zeigen:
- Fig. 1: einen Längsschnitt durch den Frontbereich einer Laufbildkamera mit einem Kameragehäuse und einem im Kameragehäuse aufgehängten Kameraskelett;
- Fig. 2: einen Querschnitt durch den Frontbereich der Laufbildkamera;
- Fig. 3: eine vergrößerte Darstellung der unteren Aufhängung des Kameraskeletts in der Anordnung gemäß den Fig. 1 und 2;
- Fig. 4: einen Längsschnitt durch den vorderen Bereich einer Laufbildkamera mit einer unteren Aufhängung des Kameraskeletts nach Art eines "Rost'schen Pendels";
- Fig. 5 und 6: Längs- und Querschnitte durch den vorderen Bereich einer Laufbildkamera mit einem Kameragehäuse und einem im Kameragehäuse aufgehängten Kameraskelett mit einer Variante der unteren Aufhängung des Kameraskeletts;
- Fig. 7: eine vergrößerte Darstellung eines Pufferelements mit einer als radialer Schnitt durch das Pufferelement ausgebildeten Dehnungsfuge und
- Fig. 8: eine vergrößerte Darstellung eines Pufferelements mit einer als ausgeschnittenes Segment ausgebildeten Dehnungsfuge.

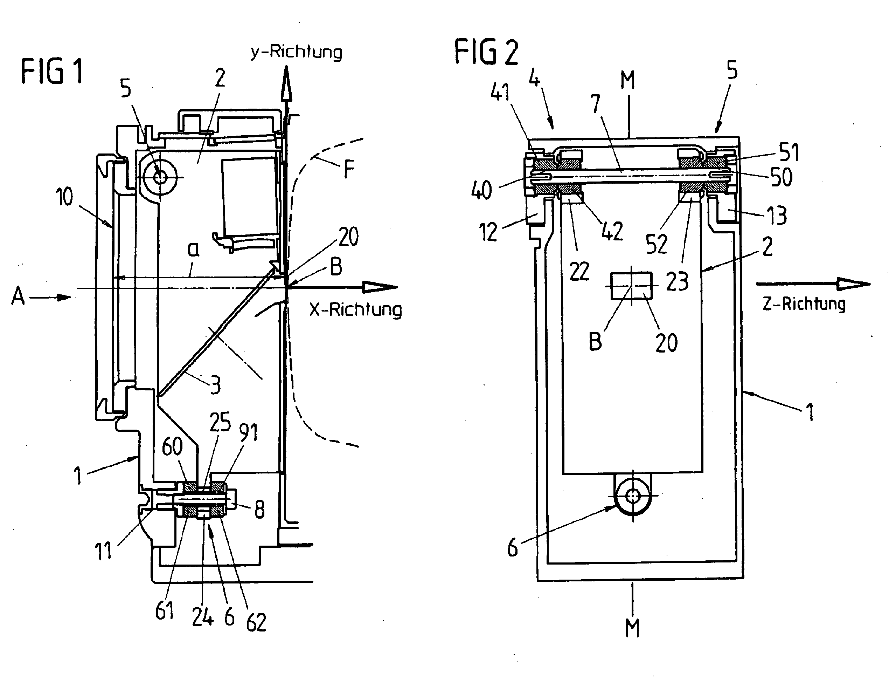

Der in Fig. 1 im Längsschnitt und in Fig. 2 im Querschnitt dargestellte Frontbereich einer Laufbildkamera weist ein äußeres Kameragehäuse 1 mit einem frontseitigen Objektivträger 10 mit einer eine Objektivauflage ausbildenden Objektivbefestigung zur Aufnahme eines auswechselbaren Kameraobjektivs auf. Die optische Achse des Kameraobjektivs bildet die strichpunktiert dargestellte Bildmitte B des Aufnahmebildes der Laufbildkamera.

Im Innern des Kameragehäuses 1 ist ein Kameraskelett 2 angeordnet, das sämtliche bewegliche und damit Geräusche erzeugende Teile der Laufbildkamera enthält wie ein Greiferschaltwerk zum intermittierenden Transport eines Laufbildfilmes F entlang eines Bildfensters 20, das symmetrisch zur Bildmitte B angeordnet ist, Vor- und Nachwickeleinrichtungen zum kontinuierlichen Transport des Laufbildfilmes F von einer Abwickelrolle einer mit der Laufbildkamera verbundenen Filmkassette auf eine Aufwickelrolle der Filmkassette und eine in Fig. 1 dargestellte rotierende Spiegelblende 3, die den Aufnahmestrahlengang zur Belichtung des Laufbildfilmes F im Bildfenster 20 freigibt bzw. zu einem Okular und/oder zu einer Ausspiegelungseinrichtung ablenkt.

Das Kameraskelett 2 ist in dem Kameragehäuse 1 unter Bildung eines Luftspaltes zwischen dem Kameragehäuse 1 und dem Kameraskeletts 2 aufgehängt, damit das Kameragehäuse 1 die auf dem Kameraskelett 2 erzeugten Geräusche bzw. Schallwellen gegenüber der Umgebung der Laufbildkamera abschirmt. Dies wird zum einen durch geeignete Maßnahmen erzielt, die den Luftschall zwischen dem Kameraskelett 2 und dem Kameragehäuse 1 dämpfen, und zum anderen entsprechend dem Gegenstand der vorliegenden Erfindung durch Verbindungselemente 4, 5, 6 bewirkt, mit denen das Kameraskelett 2 im Kameragehäuse 1 aufgehängt wird und die so beschaffen sind, dass sie den vom Kameraskelett 2 ausgehenden Körperschall optimal dämpfen, so dass insbesondere keine Körperschallwellen über den Objektivträger 10 an das Kameraobjektiv abgegeben und von diesem an die Umgebung der Laufbildkamera abgestrahlt werden.

Darüber hinaus soll die Verbindung des Kameraskeletts 2 mit dem Kameragehäuse 1 so beschaffen sein, dass das Auflagemaß a, das heißt der Abstand zwischen der Objektivauflage 10 und der Ebene E des Bildfensters 20 bzw. der Bildebene exakt eingehalten wird, da jede Verschiebung des Auflagemaßes a Bildunschärfen sowie Ungenauigkeiten der Bildlage des auf den Laufbildfilm F projizierten Filmbildes zur Folge hat. Da eine optimale Dämpfung des vom Kameraskelett 2 ausgehenden Körperschalls mit Verbindungselementen 4, 5, 6 zwischen dem Kameragehäuse 1 und dem Kameraskelett 2 bewirkt wird, die die Schallenergie maximal absorbieren und eine dementsprechend hohe Elastizität aufweisen, die Einhaltung eines konstanten Auflagemaßes a aber eine möglichst starre Verbindung zwischen dem Kameragehäuse und dem Kameraskelett 2 erforderlich macht, ist eine Aufhängung des Kameraskeletts 2 im Kameragehäuse 1 erforderlich, die den beiden vorgenannten, einander widersprechenden Forderungen gerecht wird.

Zur optimalen Erfüllung der beiden vorgenannten Forderungen ist das Kameraskelett 2 gemäß Fig. 2 über drei an der Frontseite der Laufbildkamera angeordnete Verbindungselemente 4, 5, 6 mit dem Kameragehäuse 1 verbunden, die die Eckpunkte eines in diesem Ausführungsbeispiel gleichschenkligen Dreiecks bilden, bei dem die oberen Verbindungselemente 4, 5 symmetrisch zu beiden Seiten einer Mittenebene M der Laufbildkamera angeordnet sind, die durch die X-Achse bzw. Längsachse oder optische Achse der Laufbildkamera, in der der Aufnahmestrahlengang A verläuft, und durch die Y-Achse bzw. Hochachse der Laufbildkamera aufgespannt wird. Ein unteres Verbindungselement 6 ist unterhalb des Aufnahmestrahlenganges A bzw. der Bildmitte B in der Mittenebene M angeordnet. Alternativ hierzu können die an der Frontseite der Laufbildkamera angeordneten Verbindungselemente 4, 5, 6 auch in anderer geometrischer Konfiguration das Kameraskelett 2 mit dem Kameragehäuse 1 verbinden.

Die oberen Verbindungselemente 4, 5 sind somit in der senkrecht zur X- und Y-Richtung verlaufenden Z-Richtung, d.h. in Richtung der Querachse der Laufbildkamera, ausgerichtet und bilden einen Drehpunkt bzw. eine Schwenkachse aus, um den bzw. um die das Kameraskelett 2 gegenüber dem Kameragehäuse 1 verschwenkt werden kann. Das untere Verbindungselement 6 bildet einen Fixpunkt als Aufhängungspunkt aus, der das Kameraskelett 2 in der eingestellten Lage in Bezug auf das Kameragehäuse 1 fixiert.

Die Verbindungselemente 4, 5, 6 enthalten Pufferelemente 41, 42; 51, 52; 61, 62 aus einem Polyurethan-Elastomer ("Eladur") mit einer Mittenbohrung 40, 50, 60 sowie einen durch die Mittenbohrung 40, 50, 60 gestreckten Stift 7, 8. Die buchsenförmig ausgebildeten Pufferelemente 41, 42, bzw. 51, 52 des oberen Verbindungselements 4, 5 sind in Aufnahmen 12, 13 des Kameragehäuses 1 bzw. 22, 23 des Kameraskeletts 2- eingesetzt und liegen mit ihren einander zugewandten Stirnseiten dicht aneinander an. In dem in den Fig. 1 und 2 dargestellten Ausführungsbeispiel ist der Stift 7 als durchgehende Achse ausgebildet, die die beiden Verbindungselemente 4, 5 miteinander verbindet und dementsprechend eine Schwenkachse für das Kameraskelett 2 ausbildet. Nicht näher bezeichnete Stopfen werden von der Außenseite in die Aufnahme 12, 13 des Kameragehäuses 1 eingesetzt und dichten die Verbindungselemente 4, 5 zur Außenseite der Laufbildkamera ab.

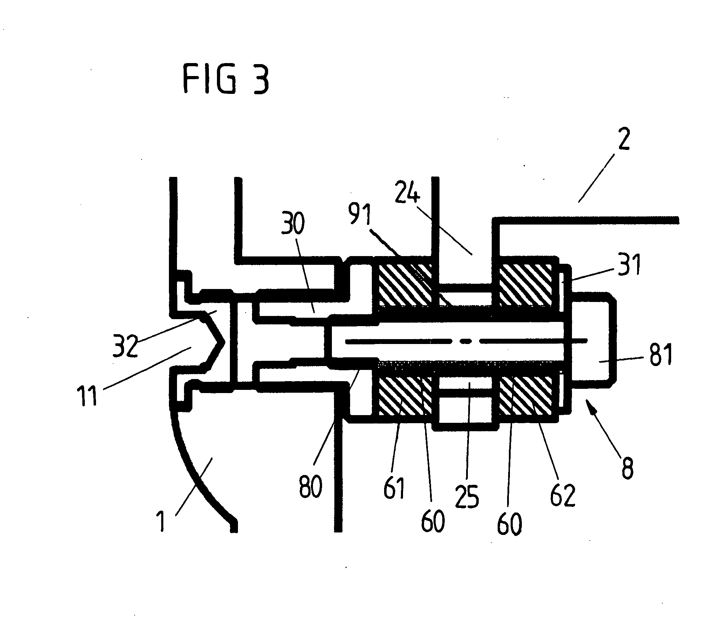

Das in Fig. 3 vergrößert dargestellte untere Verbindungselement 6 ist gemäß Fig. 1 in X-Richtung ausgerichtet und weist ebenfalls zwei Pufferelemente 61, 62 mit Mittenbohrungen 60 auf, die beidseitig an den Außenseiten eines eine Bohrung 25 aufweisenden Flansches 24 des Kameraskeletts 2 anliegen. Eine durch die Mittenbohrungen 60 der Pufferelemente 61, 62 gestreckte Schraube 8 ist in eine Gewindebuchse 30 eingeschraubt, die in einer Öffnung 11 an der frontseitigen Wand des Kameragehäuses 1 angeordnet ist. Der Schraubenkopf 81 liegt über eine Scheibe 31 an der Außenseite eines am Flansch 24 des Kameraskeletts 2 anliegenden Pufferelements 62 an, so dass das Maß des Einschraubens der Schraube 8 in die Gewindebuchse 30 eine Vorspannung der Pufferelemente 61, 62 in axialer Richtung, das heißt in X-Richtung, hervorruft.

Da das Puffelement 61 des unteren Verbindungselements 6 zwischen der mit der frontseitigen Wand des Kameragehäuses 1 verbundenen Gewindebuchse 30 und dem Flansch 24 des Kameraskeletts 2 angeordnet ist, führen Temperaturschwankungen zu einer Längen- bzw. Volumenänderung des Pufferelements 61 nach Maßgabe des Ausdehnungskoeffizienten des aus einem Polyurethan-Elastomer bestehenden Pufferelements 61. Diese Längen- bzw. Volumenänderung des Pufferelements 61 würde zu einer Verlagerung des unteren Aufhängungspunktes des um die obere, durch den Stift 7 gebildete Aufhängungsachse schwenkbaren Kameraskeletts 2 führen.

Aufgrund der Anordnung der Verbindungselemente 4, 5, 6 an den Eckpunkten eines gleichschenkligen Dreiecks würde eine Längenänderung des Pufferelements 61 und damit verbunden eine Verlagerung des unteren Aufhängungspunktes nur in verringertem Maße zu einer Verlagerung des Bildfensters 20 im Kameraskelett 2, d.h. der Bildebene und damit des Auflagemaßes a führen. Für viele Anwendungen ist eine nur geringfügige Änderung des Auflagemaßes a unter Berücksichtung der ohne zusätzliche Maßnahmen in Kauf zu nehmenden Änderungen des Auflagemaßes a durch temperaturbedingte Veränderungen des Kameragehäuses und des Kameraskeletts 2 durchaus akzeptabel.

Um jedoch auch eine derartige, durch das untere Verbindungselement 6 bedingte Änderung des Auflagemaßes a zu verhindern, wird die Schraube 8 mit ihrem Schraubengewinde 80 so weit in die Gewindebuchse 30 eingeschraubt, dass die Pufferelemente 61, 62 in Richtung der Längs- oder optischen Achse der Laufbildkamera, das heißt in X-Richtung, der Schraube 8 elastisch vorgespannt werden.

Eine Vorspannung der Pufferelemente 61, 62 des unteren Verbindungselements 6 bewirkt, dass Temperaturschwankungen nicht mehr zu Längen- bzw. Volumenänderungen der Pufferelemente 61, 62, sondern zu einer Veränderung der Vorspannung der Pufferelemente 61, 62 und damit insbesondere des zwischen dem Flansch 24 des Kameraskeletts 2 und der frontseitigen Wand des Kameragehäuses 1 angeordneten Pufferelements 61 führen. Dadurch ändert sich die Position der durch die Mittenbohrungen 60 der Pufferelemente 61, 62 gesteckten Schraube 8 gegenüber dem Flansch 24 des Kameraskeletts 2 und der frontseitigen Wand des Kameragehäuses 1 nicht, so dass sich auch das Auflagemaß a zwischen der Bildebene 20 am Kameraskelett 2 und der Objektivauflage des Objektivträgers 10 nicht verändert.

Voraussetzung hierfür ist eine korrekte Einstellung der Vorspannung der Pufferelemente 61, 62 des unteren Verbindungselements 6, so dass einerseits die Dämpfungseigenschaften der Pufferelemente 61, 62 wegen einer nicht zu hohen Vorspannung erhalten bleiben und andererseits bei Temperaturschwankungen keine Längenänderungen der Pufferelemente 62, 62 aufgrund einer zu geringen Vorspannung erfolgen können.

Zur exakten Einstellung einer optimalen Vorspannung ist in einer ersten Variante gemäß Fig. 3 eine Distanzbuchse 91 vorgesehenen, die durch die Mittenbohrungen 60 der Pufferelemente 61, 62 und die Bohrung 25 des Flansches 24 des Kameraskeletts 2 gesteckt ist und die endseitig an der mit der frontseitigen Wand des Kameragehäuses 1 verbundenen Gewindebuchse 30 und am Schraubenkopf 81 bzw. der zwischen dem Schraubenkopf 81 und dem äußeren Pufferelement 62 angeordneten Scheibe 31 anliegt und dadurch die Einschraubtiefe der Schraube 8 in die Gewindebuchse 30 und dementsprechend die Vorspannung der Pufferelemente 61, 62 bestimmt.

Bei Temperaturschwankungen wirkt sich eine Längen- bzw. Volumenänderung der Pufferelemente 61, 62 somit in eine Erhöhung bzw. Verringerung der Vorspannung der Pufferelemente 61, 62, nicht aber in eine Verlagerung des Flansches 24 des Kameraskeletts 2 und damit eine Veränderung des Auflagemaßes a zwischen der Objektivauflage am Kameragehäuse 1 und der Bildebene am Kameraskeletts 2 aus.

Anstelle einer Distanzbuchse 91 kann zur Einstellung der Vorspannung der Pufferelemente 61, 62 bei einem in X-Richtung ausgerichteten unteren Verbindungselement 6 ein Federelement in Form einer Tellerfeder oder einer Druckfeder zwischen dem Schraubenkopf 81 und der Scheibe 31 angeordnet werden, dessen Federkraft unter Berücksichtung seiner Federkonstanten bei nicht auf Anschlag angezogenem Federelement die Vorspannung der Pufferelemente 61, 62 bestimmt.

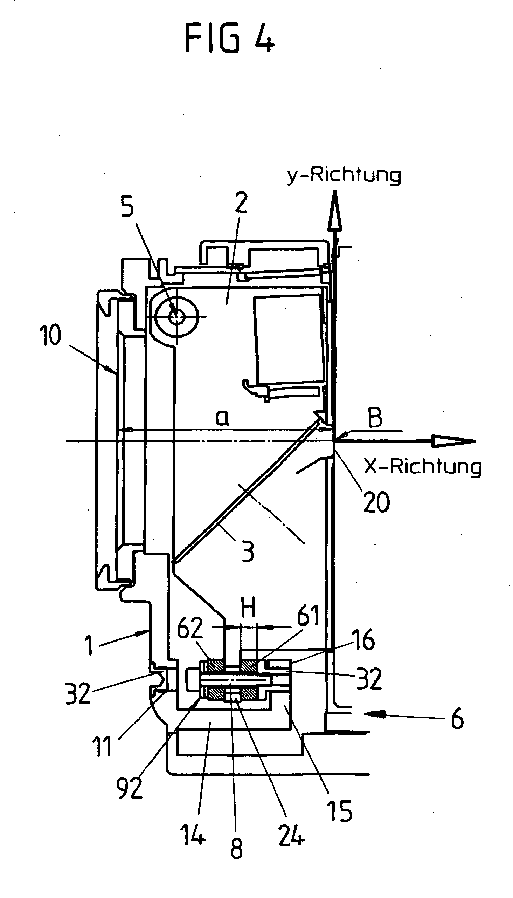

Fig. 4 zeigt in einem Längsschnitt durch den frontseitigen Bereich einer Laufbildkamera eine Einstellung der Vorspannung der Pufferelemente 61, 62 bei in X-Richtung ausgerichtetem, unterem Verbindungselement 6 mittels eines Federelements 92, das zwischen dem Schraubenkopf 81 und der am äußeren Pufferelement 62 anliegenden Scheibe 31 angeordnet ist. Das untere Verbindungselement 6 list zwischen einem in das Innere der Laufbildkamera gerichteten Verbindungsarm 14. des Kameragehäuses 1, von dem ein Flansch 15 mit einer Bohrung 16 abgewinkelt ist, und dem Flansch 24 mit der Bohrung 25 des Kameraskeletts 2 angeordnet. Bei korrekt mittels dies Federelements 92 eingestellter Vorspannung ändert sich die Länge bzw. Höhe des zwischen dem Flansch 24 des Kameraskeletts 2 und dem Flansch 15 des Kameragehäuses 1 angeordneten Puffelements 61 bei Temperaturschwankungen nicht, sondern führt zu einer Zu- oder Abnahme der Vorspannung des Pufferelements 61.

Aufgrund der speziellen Ausgestaltung der Anbindung des unteren Verbindungselements 6 am Kameragehäuse 1 kann die aus Temperaturänderungen resultierende Längenänderung der am unteren Aufhängungspunkt des Kameraskeletts 2 miteinander verbundenen Bauteile so eingestellt werden, dass die resultierende Gesamt-Längenänderung Null wird, das heißt zu keiner Verlagerung des unteren Aufhängungspunktes des Kameraskelettes 2 und damit zu keiner. Änderung des Auflagemaßes a zwischen der Objektivauflage am Kameragehäuse 1 und der Bildebene am Kameraskelett 2 führt.

Eine derartige Verlagerung des unteren Aufhängungspunktes des Kameraskeletts 2 am Kameragehäuse 1 kann sich aus einer unzureichend dimensionierten Vorspannung der Pufferelemente 61, 62 mittels des Federelements 92 bzw. einer ohne Federelement 92 oder Distanzbuchse 91 eingestellten Vorspannung ergeben. Sie kann aber auch gezielt mit oder ohne eingestellter Vorspannung der Pufferelemente 61, 62 unter Berücksichtigung der Längenänderungen des Kameragehäuses 1 und des Kameraskeletts 2 eingesetzt werden, indem Längenänderungen des unteren Verbindungselements 6 die durch Temperaturänderungen herbeigeführten Änderungen des Kameragehäuses 1 und des Kameraskeletts 2 derart kompensieren, dass sich die in unterschiedliche Richtungen wirkenden Längenänderungen der Pufferelemente 61, 62 und des Verbindungsarms 14 des Kameragehäuses 1 nach Art eines Rost'schen Pendels gegenseitig aufheben und damit zu einer Gesamt-Längenänderung Null führen. Bei entsprechender Auslegung der Materialeigenschaften und Dimensionierungen der Bauteile des unteren Aufhängungspunktes des Kameraskeletts 2 kann somit zumindest in einem vorgegebenen Temperaturbereich eine unveränderliche Position des unteren Aufhängungspunktes des Kameraskeletts 2 am Kameragehäuse 1 und damit ein konstantes Auflagemaß a zwischen der Objektivauflage am Kameragehäuse 1 und der Bildebene am Kameraskelett 2 eingestellt werden.

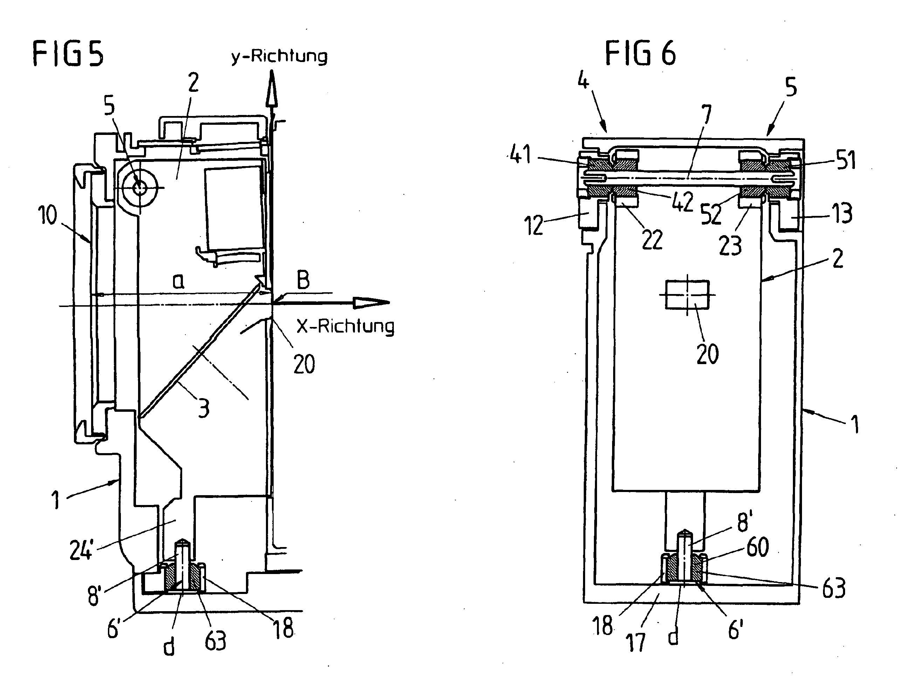

Fig. 5 zeigt eine Ausführungsform der Erfindung, bei der ein unteres Verbindungselement 6' in Y-Richtung ausgerichtet ist, so dass Längenänderungen des Verbindungselements 6' nicht zu einer Verlagerung des unteren Aufhängungspunktes des Kameraskeletts 2 am Kameragehäuse 1 und damit zu einer Veränderung des Auflagemaßes a zwischen der Objektivauflage am Kameragehäuse 1 und der Bildebene am Kameraskelett 2 führen.

In der Ausführungsform gemäß Fig. 5 ist das untere Verbindungselement 6' entsprechend den oberen Verbindungselementen 4, 5 ausgebildet und weist ein in eine mit dem Boden 17 des Kameragehäuses 1 verbundene Aufnahme 18 eingesetztes Pufferelement 63 auf, durch dessen Mittenbohrung 60 ein Stift oder eine Schraube 8' gesteckt ist, dessen bzw. deren dem Kameragehäuse 1 zugewandtes stirnseitiges Ende zum Boden 17 des Kameragehäuses 2 einen Abstand d aufweist und in eine Bohrung in einem Flansch 24' des Kameraskeletts 2 eingesetzt ist. Der Stift 8' kann in das Pufferelement 63 integriert werden, in dem beispielsweise das Pufferelement 63 an den Stift 8' angeformt, insbesondere anvulkanisiert wird. Durch diese Anordnung und Ausgestaltung des unteren Aufhängungspunktes des Kameraskeletts 2 am Kameragehäuse 1 ist somit einerseits ein konstantes Auflagemaß a sichergestellt und andererseits gewährleistet, dass der vom Kameraskelett 2 ausgehende Körperschall vom Pufferelement 63 absorbiert wird, das die alleinige untere Verbindung zwischen dem Kameraskelett 2 und dem Kameragehäuse 1 herstellt.

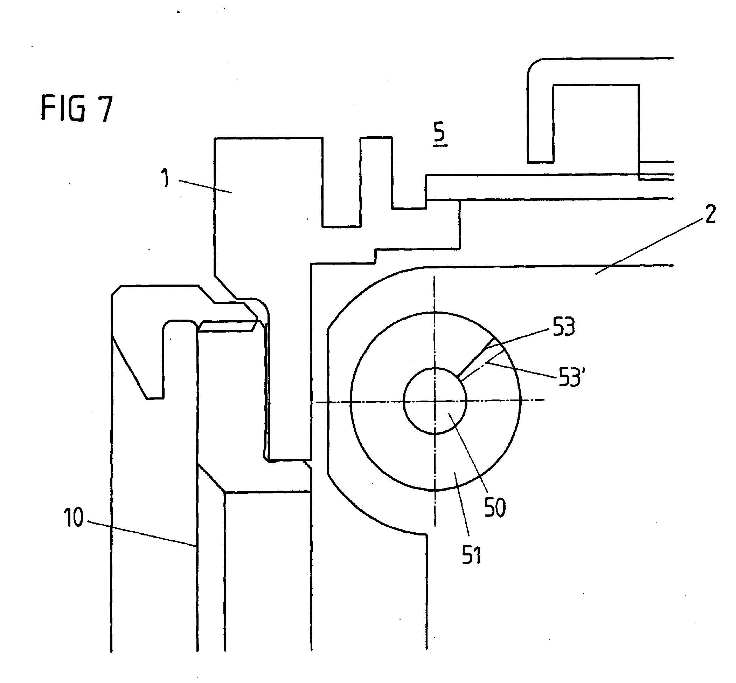

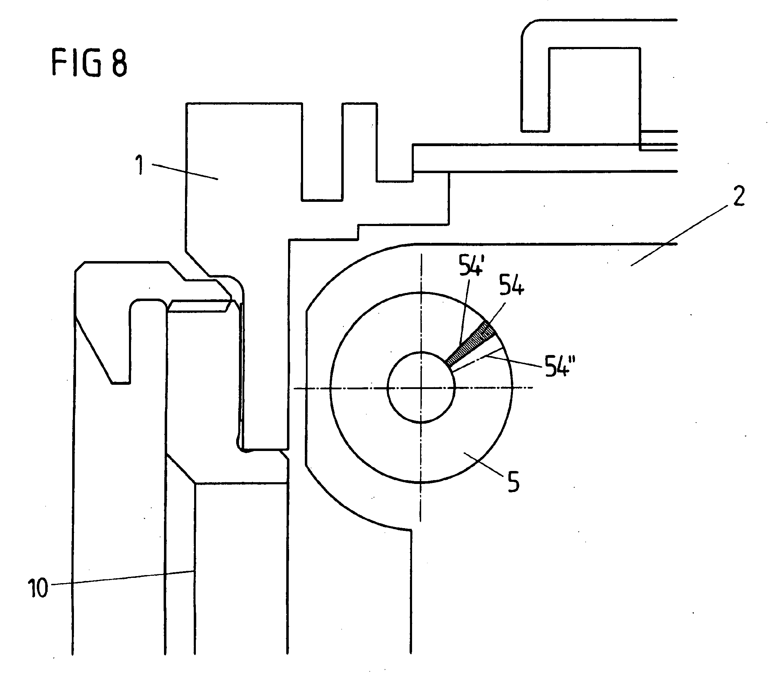

Um zu Längenänderungen oder Verlagerungen der Pufferelemente 41, 42; 51, 52; 61, 62, 63 führende Volumenänderungen der Pufferelemente 41, 42; 51, 52; 61, 62, 63 zu verhindern, können zusätzlich die in den Fig. 7 und 8 dargestellten Maßnahmen getroffen werden, mit denen Volumenänderungen der Pufferelemente 41, 42; 51, 52; 61, 62, 63 abgefangen werden.

Fig. 7 zeigt exemplarisch in vergrößerter Darstellung das äußere Pufferelement 51 des oberen Verbindungselements 5 mit der den Stift bzw. die Schwenkachse 7 aufnehmenden Bohrung 50. Durch einen radialen Schnitt 53 durch das hohlzylindrische oder zylinderringförmig ausgebildete Pufferelement 51 wird eine Dehnungsfuge" geschaffen, deren Größe sich bei auf das Pufferelement 51 einwirkenden Temperaturänderungen verändert. Wird beispielsweise das Pufferelement 51 für eine maximale Temperatur von beispielsweise 40° C ausgelegt, so führt bei einer Temperaturverringerung der radiale Schnitt 53 durch das Pufferelement 51 zu einem Aufklaffen des Schnittes 53, so dass die strichpunktiert dargestellte Schnittfläche 53' in Umfangsrichtung zur anderen Schnittfläche 53 beabstandet ist.

Da ein radialer Schnitt durch das Pufferelement im Wesentlichen nur bei einer Temperaturverringerung durch ein Aufklaffen der Schnittflächen wirksam ist, während bei einer Temperaturerhöhung die Schnittflächen lediglich stärker zusammengepresst werden, kann ein noch besseres Ergebnis gemäß Fig. 8 dadurch erzielt werden, dass ein Segment 54 aus dem Pufferelement 51 herausgeschnitten wird, das sowohl auf eine Temperaturverringerung als auch auf eine Temperaturerhöhung mit einer Veränderung der Segmentbreite reagiert. Während sich bei einer Verringerung der Umgebungstemperatur der Abstand der Schnittenden 54', 54" des herausgeschnittenen Segments 54 infolge der vom Ausdehnungskoeffizienten und dem Maß der Temperaturabnahme abhängigen Volumenverringerung des Pufferelements 51 vergrößert, verringert sich die Segmentbreite bei einer Erhöhung der Umgebungstemperatur entsprechend den vorstehenden Kriterien.

Insbesondere in Verbindung mit einer Vorspannung der Pufferelemente 41, 42; 51, 52; 63 und insbesondere der Pufferelemente 61, 62 führt die in den Fig. 7 und 8 dargestellte Dehnungsfuge zu einer erhöhten Toleranz der Vorspannung der Pufferelemente, da sich Temperaturänderungen nicht über eine Volumenänderung der Pufferelemente auf deren Längenänderung auswirken, so dass auch bei nicht exakt eingestellter Vorspannung des unteren Verbindungselements 6 bzw. 6' keine Änderung des Auflagemaßes a erfolgt.

In Verbindung mit den Pufferelementen 41, 42 und 51, 52 der oberen Verbindungselemente 4, 5 führt die Dehnungsfuge gemäß den Fig. 7 und 8 dazu, dass Volumenänderungen dieser Pufferelemente zu keiner Verlagerung des bzw. der durch die Bohrungen 40, 50 der Pufferelemente 41, 42; 51, 52 gesteckten Stifte 7 bzw. Stiftachse 7 führt.

### Bezugszeichenliste

- 1: Kameragehäuse
- 2: Kameraskelett
- 3: Spiegelblende
- 4, 5: Obere Verbindungselemente
- 6, 6': unteres Verbindungselement
- 7: Stift
- 8: Schraube
- 8': Stift oder Schraube
- 10: Objektivträger
- 11: Öffnung
- 12, 13: Aufnahmen des Kameragehäuses
- 14: Verbindungsarm
- 15: Flansch
- 16: Bohrung
- 17: Boden
- 18: Aufnahme
- 20: Bildfenster
- 22, 23: Aufnahmen des Kameraskeletts
- 24, 24': Flansch
- 25: Bohrung
- 40, 50, 60: Mittenbohrung
- 41, 42, 51, 52,: Pufferelemente
- 61,62,63 53: Radialer Schnitt
- 54: Herausgeschnittenes Segment
- 80: Schraubengewinde
- 81: Schraubenkopf
- 91: Distanzbuchse
- 92: Federelement
- a: Auflagemaß
- d: Abstand Stift-Boden
- A: Aufnahmestrahlengang
- B: Bildmitte
- E: Ebene des Bildfensters (Bildebene)
- F: Laufbildfilm
- M: Mittenebene der Laufbildkamera
- X-Achse: Längsachse (optische Achse) der Kamera
- Y-Achse: Hochachse der Kamera
- Z-Achse: Querachse der Kamera

## Patentansprüche

1. Laufbildkamera mit einem Kameragehäuse (1), das einen im Aufnahmestrahlengang (A) der Laufbildkamera angeordneten Objektivträger (10) aufweist, an dem eine Aufnahmeoptik befestigbar ist, einem im Kameragehäuse. (1) angeordneten Kameraskelett (2), das Geräusche erzeugende Teile des Kameramechanismus trägt, eine Bildebene (E) für den Laufbildfilm (F) ausbildet und an mindestens zwei im Frontbereich der Laufbildkamera oberhalb und beiderseits der Bildmitte (B) der Laufbildkamera angeordneten oberen Verbindungselementen (4, 5) am
Kameragehäuse (1) aufgehängt und mit einem im Frontbereich der Laufbildkamera unterhalb der Bildmitte (B) angeordneten unteren Verbindungselement (6, 6') am Kameragehäuse (1) abgestützt ist, und mit einer Vorrichtung zur Geräuschisolation, wobei die oberen Verbindungselemente (4, 5) aus Pufferelementen (41, 42; 51, 52) aus einem Elastomer und einem durch die Pufferelemente (41, 42; 51, 52) gesteckten und die Pufferelemente (41, 42; 51, 52) mit dem Kameragehäuse (1) und dem Kameraskelett (2) verbindenden Stift (7) bestehen, und wobei das untere - Verbindungselement (6, 6') aus Pufferelementen (61, 62, 63) aus einem Elastomer und einem durch die Pufferelemente (61, 62, 63) gesteckten und die Pufferelemente (61, 62, 63) mit dem Kameragehäuse (1) und dem Kameraskelett (2) verbindenden Stift oder einer Schraube (8, 8') besteht,
**dadurch gekennzeichnet,**
**dass** die Pufferelemente (41, 42; 51, 52) der oberen Verbindungselemente (4, 5) mittels jeweils eines mit dem jeweils anderen Stift (7) fluchtenden Stiftes (7) oder mittels eines die Pufferelemente (41, 42; 59, 52) der oberen Verbindungselemente (4, 5) miteinander verbindenden, eine durchgehende Achse ausbildenden Stiftes (7) miteinander verbunden sind und dass der Stift (7) bzw. die Stifte (7) eine horizontale Schwenkachse für das Kameraskelett (2) ausbildet bzw. ausbilden.

2. Vorrichtung nach Anspruch 1, **dadurch gekennzeichnet, dass** die oberen Verbindungsefemente (4, 5) jeweils zwei in Aufnahmen (12, 13; 22, 23) des
Kameragehäuses (1) und des Kameraskeletts (2) eingesetzte und stirnseitig aneinander liegende Pufferelemente (41, 42; 51, 52) aufweisen.

3. Vorrichtung nach Anspruch 1 oder 2, **dadurch gekennzeichnet, dass** die oberen Verbindungselemente, (4, 5) in Richtung der Querachse (Z-Achse) der Laufbildkamera und das untere Verbindungselement (6, 6') in Richtung der Längs- oder optischen Achse (X-Achse) oder in Richtung der Hochachse (Y-Achse) der Laufbildkamera ausgerichtet sind.

4. Vorrichtung nach mindestens einem der vorangehenden Ansprüche, **dadurch gekennzeichnet, dass** die Pufferelemente (41, 42; 51, 52; 61, 62; 63) einen schalldämmenden Kunststoff, vorzugsweise Polyurethan-Elastomer (Eladur), enthalten.

5. Vorrichtung nach mindestens einem der vorangehenden Ansprüche, **dadurch gekennzeichnet, dass** das untere Verbindungselement (6, 6') derart angeordnet, und/oder ausgebildet ist, dass das Auflagemaß (a) zwischen der Objektivauflage (10) des Kameragehäuses (1) und dem Bildfenster (20) des Kameraskeletts (1) bei Temperaturschwankungen im Wesentlichen unabhängig von der Aufhängung des Kameraskeletts (2) am Kameragehäuse (1) ist.

6. Vorrichtung nach Anspruch 5, **dadurch gekennzeichnet, dass** das untere Verbindungselement (6) aus zwei Pufferelementen (61, 62), von denen ein erstes Pufferelement (61) zwischen der einen Seite eines mit einer Bohrung (25) versehenen Flanschs (24) des Kameraskeletts (2) und einer Ausnehmung oder Bohrung (11) im Kameragehäuse (1) angeordnet ist und ein zweites Pufferelement (62) an der anderen Seite des Flansches (24) des Kameraskeletts (2) anliegt, und einer durch Bohrungen (60) der Pufferelemente (61, 62) und die Bohrung (25) des Flansches (24) des Kameraskeletts (2) gesteckten Schraube (8) besteht, die mit einem Schraubenkopf (81) am zweiten Pufferelement (62) anliegt und kraft- oder formschlüssig in die Ausnehmung oder Bohrung (11) des Kameragehäuses (1) eingesetzt ist.

7. Vorrichtung nach Anspruch 6, **dadurch gekennzeichnet, dass** die Schraube (8) die Pufferetemente (61, 62) in Längsrichtung der Schraube (8) elastisch vorspannt.

8. Vorrichtung nach Anspruch 6 oder 7, **dadurch gekennzeichnet, dass** die Schraube (8) ein Schraubgewinde (80) aufweist und in eine in die Ausnehmung oder Bohrung (11) im Kameragehäuse (1) eingesetzte Buchse (30) mit Innengewinde eingeschraubt ist.

9. Vorrichtung nach einem der vorangehenden Ansprüche 6 bis 8, **dadurch gekenntzeichnet,** dass zwischen dem Schraubenkopf (81) und dem Kameragehäuse (1) oder der in die Ausnehmung oder Bohrung (11) im Kameragehäuse (1) eingesetzten Buchse (30) eine Distanzbuchse (91) angeordnet ist, deren Länge ein Maß für die Vorspannung der Pufferelemente (61, 62) ist.

10. Vorrichtung nach einem der vorangehenden Ansprüche 6 bis 8, **dadurch gekennzeichnet, dass** ein die Vorspannung der Pufferelemente (61, 62) bestimmendes Federelement (92) im Kraftfluss zwischen dem Schraubenkopf (81) und dem Kameragehäuse (1) oder der in die Ausnehmung oder Bohrung (11) im Kameragehäuse (1) eingesetzten Buchse (30) angeordnet ist.

11. Vorrichtung nach mindestens einem der vorangehenden Ansprüche 6 bis 10, **dadurch gekennzeichnet, dass** das Kameragehäuse (1) einen unterhalb der Bildmitte (B) der Laufbildkamera angeordneten, in das Innere des Gehäuses der Laufbildkamera gerichteten Verbindungsarm (14) mit einem endseitigen Flansch (15) aufweist, zwischen dem und dem Flansch (24) des Kameraskeletts (2) das untere Verbindungselement (6) angeordnet ist.

12. Vorrichtung nach mindestens einem der vorangehenden Ansprüche, **dadurch gekennzeichnet, dass** das untere Verbindungselement (6') aus dem in eine Aufnahme (18) am Boden (17) des Kameragehäuses (1) eingesetzten Pufferelement (63) und dem in Richtung der Hochachse (Y-Achse) der Laufbildkamera ausgerichteten, mit dem Kameraskelett (2) verbundenen und vom Boden (17) des Kameragehäuses (1) beabstandeten, kraft- oder formschlüssig mit dem Pufferelement. (63) verbundenen Stift (8') oder einer Schraube besteht.

13. Vorrichtung nach mindestens einem der vorangehenden Ansprüche, **dadurch gekennzeichnet, dass** die Pufferelemente (41, 42; 51, 52; 61, 62; 63) eine radiale Dehnungsfuge (53, 54) aufweisen.

14. Vorrichtung nach Anspruch 13, **dadurch gekennzeichnet, dass** die Dehnungsfuge durch einen radialen Schnitt (53) durch die Pufferelemente (41, 42; 51, 52; 61, 62; 63) gebildet ist.

15. Vorrichtung nach Anspruch 14, **dadurch gekennzeichnet, dass** die Dehnungsfuge durch Entfernen eines Segmentes (54) aus den Pufferelementen (41, 42; 51, 52; 61, 62; 63) gebildet ist.

## Claims

1. A motion picture camera having a camera housing (1) that has an objective carrier (10) which is arranged in the recording beam path (A) of the motion picture camera and on which a recording optic can be fastened, having a camera frame (2) that is arranged in the camera housing (1), said camera frame (2) carries noise-producing parts of the camera mechanism, forms an image plane (E) for the motion picture film (F), and is suspended on the camera housing (1) at at least two upper connecting elements (4, 5) arranged in the front area of the motion picture camera above and on both sides of the image center (B) of the motion picture camera, and is supported on the camera housing (1) with a lower connecting element (6, 6') arranged in the front area of the motion picture camera below the image center (B), and having a device for soundproofing, the upper connecting elements (4, 5) being composed of buffer elements (41, 42; 51, 52) made from an elastomer and a pin (7) that is plugged through the buffer elements (41, 42; 51, 52) and connects the buffer elements (41, 42; 51, 52) with the camera housing (1) and the camera frame (2), and the lower connecting element (6, 6') being composed of buffer elements (61, 62, 63) made from an elastomer, and a pin that is plugged through the buffer elements (61, 62, 63) and connects the buffer elements (61, 62, 63) with the camera housing (1) and the camera frame (2) or a screw (8, 8'), **characterized in that** the buffer elements (41, 42; 51, 52) of the upper connecting elements (4, 5) are interconnected by means of in each case one pin (7) aligned with the respective other pin (7), or by means of a pin (7) that interconnects the buffer elements (41, 42; 51, 52) of the upper connecting elements (4, 5) and forms a continuous axis, and **in that** the pin (7) or the pins (7), respectively, forms or form a horizontal pivoting axis for the camera frame (2).

2. The device as claimed in claim 1, **characterized in that** the upper connecting elements (4, 5) respectively have two buffer elements (41, 42; 51, 52) that are inserted into holders (12, 13; 22, 23) of the camera housing (1) and of the camera frame (2), and lie against one another at the end face.

3. The device as claimed in claim 1 or 2, **characterized in that** the upper connecting elements (4, 5) are aligned in the direction of the transverse axis (Z-axis) of the motion picture camera, and the lower connecting element (6, 6') is aligned in the direction of the longitudinal or optical axis (X-axis) or in the direction of the vertical axis (Y-axis) of the motion picture camera.

4. The device as claimed in at least one of the preceding claims, **characterized in that** the buffer elements (41, 42; 51, 52; 61, 62; 63) contain a sound insulating plastic, preferably polyurethane elastomer (Eladur).

5. The device as claimed in at least one of the preceding claims, **characterized in that** the lower connecting element (6, 6') is arranged and/or formed in such a way that the support dimension (a) between the objective support (10) of the camera housing (1) and the image window (20) of the camera frame (1) is substantially independent of the suspension of the camera frame (2) on the camera housing (1) in the event of temperature fluctuations.

6. The device as claimed in claim 5, **characterized in that** the lower connecting element (6) comprises two buffer elements (61, 62), from which a first buffer element (61) is arranged between one side of a flange (24), provided with a bore (25), of the camera frame (2) and a cutout or a bore (11) in the camera housing (1), and a second buffer element (62) bears against the other side of the flange (24) of the camera frame (2), and a screw (8) that is plugged through bores (60) of the buffer elements (61, 62) and the bore (25) in the flange (24) of the camera frame (2), bears against the second buffer element (62) with a screw head (81), and is inserted into the cutout or bore (11) in the camera housing (1) in a non-positive-locking or positive-locking fashion.

7. The device as claimed in claim 6, **characterized in that** the screw (8) elastically prestresses the buffer elements (61, 62) in the longitudinal direction of the screw (8).

8. The device as claimed in claim 6 or 7, **characterized in that** the screw (8) has a screw thread (80) and is screwed into a socket (30) having an internal thread and inserted into the cutout or bore (11) in the camera housing (1).

9. The device as claimed in one of the preceding claims 6 to 8, **characterized in that** arranged between the screw head (81) and the camera housing (1) or the socket (30) inserted into the cutout or bore (11) in the camera housing (1) is a spacer bushing (91) whose length is a measure of the prestressing of the buffer elements (61, 62).

10. The device as claimed in one of the preceding claims 6 to 8, **characterized in that** a spring element (92) determining the prestressing of the buffer elements (61, 62) is arranged in the direction of force lines between the screw head (81) and the camera housing (1), or the socket (30) inserted into the cutout or bore (11) in the camera housing (1).

11. The device as claimed in at least one of the preceding claims 6 to 10, **characterized in that** the camera housing (1) has a connecting arm (14) that is arranged below the image center (B) of the motion picture camera, is directed into the interior of the housing of the motion picture camera, and has a terminal flange (15) between which and the flange (24) of the camera frame (2), the lower connecting element (6) is arranged.

12. The device as claimed in at least one of the preceding claims, **characterized in that** the lower connecting element (6') comprises the buffer element (63) inserted into a holder (18) on the bottom (17) of the camera housing (1), and the pin (8') that is aligned in the direction of the vertical axis (Y-axis) of the motion picture camera, is connected to the camera frame (2), and is connected in a force-closed or self-closed fashion to the buffer element (63) at a distance from the bottom (17) of the camera housing (1), or a screw.

13. The device as claimed in at least one of the preceding claims, **characterized in that** the buffer elements (41, 42; 51, 52; 61, 62; 63) have a radial expansion joint (53, 54).

14. The device as claimed in claim 13, **characterized in that** the expansion joint is formed by a radial cut (53) through the buffer elements (41, 42; 51, 52; 61, 62; 63).

15. The device as claimed in claim 14, **characterized in that** the expansion joint is formed by removing a segment (54) from the buffer elements (41, 42; 51, 52; 61, 62; 63).

## Revendications

1. Caméra comprenant un boîtier de caméra (1) qui présente un porte-objectif (10) disposé dans la trajectoire du faisceau d'enregistrement (A) de la caméra, sur lequel peut être fixé un système optique réceptif, un squelette de caméra (2) disposé dans le boîtier de caméra (1) qui porte des parties générant des bruits du mécanisme de la caméra, qui réalise un plan d'image (E) pour le film (F) et qui est suspendu à au moins deux éléments de liaison supérieurs (4, 5) disposés dans la zone frontale de la caméra au-dessus et des deux côtés du milieu de l'image (B) de la caméra sur le boîtier de caméra (1) et est en appui par un élément de liaison inférieur (6, 6') disposé dans la zone frontale de la caméra au-dessous du milieu de l'image (B) contre le boîtier de caméra (1), et un dispositif d'isolation acoustique, dans lequel les éléments de liaison supérieurs (4, 5) se composent d'éléments tampon (41, 42 ; 51, 52) en un élastomère et d'une tige (7) enfichée dans les éléments tampon (41, 42 ; 51, 52) et reliant les éléments tampon (41, 42 ; 51, 52) au boîtier de caméra (1) et au squelette de caméra (2), et dans lequel l'élément de liaison inférieur (6, 6') se compose d'éléments tampon (61, 62, 63) en un élastomère et d'une tige enfichée dans les éléments tampon (61, 62, 63) et reliant les éléments tampon (61, 62, 63) au boîtier de caméra (1) et au squelette de caméra (2) ou d'une vis (8, 8'),
**caractérisée en ce**
**que** les éléments tampon (41, 42 ; 51, 52) des éléments de liaison supérieurs (4, 5) sont reliés entre eux respectivement à l'aide d'une tige (7) s'alignant avec l'autre tige respective (7) ou à l'aide d'une tige (7) réalisant un axe continu, et reliant entre eux les éléments tampon (41, 42 ; 51, 52) des éléments de liaison supérieurs (4, 5) et en ce que la tige (7) ou les tiges (7) réalise(nt) un axe de pivotement horizontal pour le squelette de caméra (2).

2. Dispositif selon la revendication 1, **caractérisé en ce que** les éléments de liaison supérieurs (4, 5) présentent chacun deux éléments tampon (41, 42 ; 51, 52) insérés dans des logements (12, 13 ; 22, 23) du boîtier de caméra (1) et du squelette de caméra (2) et reposant l'un sur l'autre côté frontal.

3. Dispositif selon la revendication 1 ou 2, **caractérisé en ce que** les éléments de liaison supérieurs (4, 5) sont orientés en direction de l'axe transversal (axe Z) de la caméra et l'élément de liaison inférieur (6, 6') est orienté en direction de l'axe longitudinal ou optique (axe X) ou en direction de l'axe vertical (axe Y) de la caméra.

4. Dispositif selon au moins l'une quelconque des revendications précédentes, **caractérisé en ce que** les éléments tampon (41, 42 ; 51, 52 ; 61, 62 ; 63) contiennent un plastique insonorisant, de préférence un élastomère-polyuréthane (Eladur).

5. Dispositif selon au moins l'une quelconque des revendications précédentes, **caractérisé en ce que** l'élément de liaison inférieur (6, 6') est disposé et/ou réalisé de telle manière que la dimension de support (a) entre le porte-objectif (10) du boîtier de la caméra (1) et la fenêtre de cadrage (20) du squelette de caméra (1) lors de fluctuations de température ne dépende sensiblement pas de la suspension du squelette de la caméra (2) au boîtier de caméra (1).

6. Dispositif selon la revendication 5, **caractérisé en ce que** l'élément de liaison inférieur (6) se compose de deux éléments tampon (61, 62), dont un premier élément tampon (61) est disposé entre un côté d'une bride (24) pourvue d'un perçage (25) du squelette de caméra (2) et un évidement ou perçage (11) dans le boîtier de caméra (1) et dont un second élément tampon (62) repose sur l'autre côté de la bride (24) du squelette de caméra (2), et d'une vis (8) enfichée dans des perçages (60) des éléments tampon (61, 62) et le perçage (25) de la bride (24) du squelette de caméra (2), laquelle vis repose par une tête (81) sur le second élément tampon (62) et est insérée à force ou positivement dans l'évidement ou perçage (11) du boîtier de caméra (1).

7. Dispositif selon la revendication 6, **caractérisé en ce que** la vis (8) précontraint élastiquement les éléments tampon (61, 62) dans son sens longitudinal.

8. Dispositif selon la revendication 6 ou 7, **caractérisé en ce que** la vis (8) présente un filetage (80) et est vissée dans une douille (30) insérée dans l'évidement ou perçage (11) dans le boîtier de caméra (1) et présentant un filetage intérieur.

9. Dispositif selon l'une quelconque des revendications précédentes 6 à 8, **caractérisé en ce qu'**une douille d'écartement (91), dont la longueur est une mesure pour la précontrainte des éléments tampon (61, 62), est disposée entre la tête de vis (81) et le boîtier de caméra (1) ou la douille (30) insérée dans l'évidement ou perçage (11) dans le boîtier de caméra (1).

10. Dispositif selon l'une quelconque des revendications précédentes 6 à 8, **caractérisé en ce qu'**un élément de ressort (92) déterminant la précontrainte des éléments tampon (61, 62) est disposé dans le flux de force entre la tête de vis (81) et le boîtier de caméra (1) ou la douille (30) insérée dans l'évidement ou perçage (11) dans le boîtier de caméra (1).

11. Dispositif selon au moins l'une quelconque des revendications précédentes 6 à 10, **caractérisé en ce que** le boîtier de caméra (1) présente un bras de liaison (14) dirigé à l'intérieur du boîtier de la caméra, disposé au-dessous du milieu d'image (B) de la caméra et doté d'une bride (15) côté extrémité, entre laquelle et la bride (24) du squelette de caméra (2) est disposé l'élément de liaison (6) inférieur.

12. Dispositif selon au moins l'une quelconque des revendications précédentes, **caractérisé en ce que** l'élément de liaison (6') inférieur se compose de l'élément tampon (63) inséré dans un logement (18) sur le fond (17) du boîtier de caméra (1) et de la tige (8') ou d'une vis reliée à force ou positivement à l'élément tampon (63), espacée du fond (17) du boîtier de la caméra (1), reliée au squelette de la caméra (2) et orientée en direction de l'axe vertical (axe Y) de la caméra.

13. Dispositif selon au moins l'une quelconque des revendications précédentes, **caractérisé en ce que** les éléments tampon (41, 42 ; 51, 52 ; 61, 62 ; 63) présentent un joint de dilatation radial (53, 54).

14. Dispositif selon la revendication 13, **caractérisé en ce que** le joint de dilatation est formé par une coupe radiale (53) des éléments tampon (41, 42 ; 51, 52 ; 61, 62 ; 63).

15. Dispositif selon la revendication 14, **caractérisé en ce que** le joint de dilatation est formé par retrait d'un segment (54) des éléments tampon (41, 42 ; 51, 52 ; 61, 62 ; 63).
